# EUROPEAN PATENT APPLICATION

(11) **EP 4 447 550 A1**
(43) Date of publication of application: **16.10.2024**
(21) Application number: 24163191.0
(22) Date of filing: 13.03.2024
(51) Int. Cl.: H04W 36/02, H04W 76/20, H04W 76/25, H04W 36/32

(54) **AVOIDANCE OF RRM MEASUREMENTS BY UE IN STATIC/SEMI-STATIC CONDITIONS WITHIN WUS COVERAGE OF MULTIPLE CELLS**

(30) Priority: 14.04.2023 GB 202305539
(71) Applicant: Nokia Technologies Oy, 02610 Espoo (FI)
(72) Inventor: KNUDSEN, Knud, Aabybro (DK); HVIID, Jan Torst, Klarup (DK)
(74) Representative: Nokia EPO representatives

(57) **Abstract**

An apparatus comprising: means for performing a first determination that a mobility of the apparatus is below a mobility threshold; means for performing a second determination that the apparatus is in Wake Up Signal coverage of at least two cells; means for sending, to a serving cell and when the first determination and second determination have been performed, a message comprising: an indication that the apparatus is suspending radio resource management measurements and a list of cells indicating one or more of the at least two cells.

## Description

### FIELD

The present application relates to a method, apparatus, system and computer program.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite-based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to a first aspect, there is provided an apparatus comprising: means for performing a first determination that a mobility of the apparatus is below a mobility threshold; means for performing a second determination that the apparatus is in Wake Up Signal coverage of at least two cells; means for sending, to a serving cell and when the first determination and second determination have been performed, a message comprising: an indication that the apparatus is suspending radio resource management measurements and a list of cells indicating one or more of the at least two cells.

According to some examples, the apparatus comprises: means for receiving, from the serving cell, a rejection response to the message; means for performing radio resource management measurements based on the rejection response.

According to some examples, the apparatus comprises: means for receiving, from the serving cell, a confirmation response to the message; means for entering a first mode wherein the apparatus does not perform radio resource management measurements; means for monitoring, when in the first mode, a Wake Up Signal beacon from the serving cell.

According to some examples, the apparatus comprises: means for monitoring, when in the first mode, a Wake Up Signal beacon from a cell of the list of cells, wherein the monitoring of the cell of the list of cells is performed at a lower periodicity than the monitoring of the Wake Up Signal beacon from the serving cell.

According to some examples, the apparatus comprises: means for determining that a quality of the monitored Wake Up Signal beacon from the serving cell is below a quality threshold; means for monitoring, when the quality of the monitored Wake Up Signal beacon from the serving cell is determined to be below a quality threshold, Wake Up Signal beacons from all cells indicated in the list of cells.

According to some examples, the apparatus comprises: means for determining that a quality of each of the monitored Wake Up Signal beacons from all cells indicated in the list of cells is below a respective quality threshold; means for sending, to the serving cell and when the quality of each of the monitored Wake Up Signal beacons from all cells indicated in the list of cells is determined to be below a respective quality threshold, a request to resume radio resource management measurements.

According to some examples, the quality of at least one of the monitored Wake Up Signal beacon from the serving cell and each of the monitored Wake Up Signal beacons from all cells indicated in the list of cells is determined based on whether a predetermined number of previous beacons is correctly received or not.

According to a second aspect, there is provided method comprising: performing a first determination that a mobility of an apparatus is below a mobility threshold; performing a second determination that the apparatus is in Wake Up Signal coverage of at least two cells; sending, to a serving cell and when the first determination and second determination have been performed, a message comprising: an indication that the apparatus is suspending radio resource management measurements and a list of cells indicating one or more of the at least two cells.

According to some examples, the method comprises: receiving, from the serving cell, a rejection response to the message; performing radio resource management measurements based on the rejection response.

According to some examples, the method comprises: receiving, from the serving cell, a confirmation response to the message; entering a first mode wherein the apparatus does not perform radio resource management measurements; monitoring, when in the first mode, a Wake Up Signal beacon from the serving cell.

According to some examples, the method comprises: monitoring, when in the first mode, a Wake Up Signal beacon from a cell of the list of cells, wherein the monitoring of the cell of the list of cells is performed at a lower periodicity than the monitoring of the Wake Up Signal beacon from the serving cell.

According to some examples, the apparatus comprises: determining that a quality of the monitored Wake Up Signal beacon from the serving cell is below a quality threshold; monitoring, when the quality of the monitored Wake Up Signal beacon from the serving cell is determined to be below a quality threshold, Wake Up Signal beacons from all cells indicated in the list of cells.

According to some examples, the method comprises: determining that a quality of each of the monitored Wake Up Signal beacons from all cells indicated in the list of cells is below a respective quality threshold; sending, to the serving cell and when the quality of each of the monitored Wake Up Signal beacons from all cells indicated in the list of cells is determined to be below a respective quality threshold, a request to resume radio resource management measurements.

According to some examples, the quality of at least one of the monitored Wake Up Signal beacon from the serving cell and each of the monitored Wake Up Signal beacons from all cells indicated in the list of cells is determined based on whether a predetermined number of previous beacons is correctly received or not.

According to a third aspect, there is provided an apparatus comprising at least one processor and at least one memory storing instructions that, when executed by the at least one processor, cause the apparatus at least to: performing a first determination that a mobility of the apparatus is below a mobility threshold; performing a second determination that the apparatus is in Wake Up Signal coverage of at least two cells; sending, to a serving cell and when the first determination and second determination have been performed, a message comprising: an indication that the apparatus is suspending radio resource management measurements and a list of cells indicating one or more of the at least two cells.

According to some examples, the at least one memory and the computer program code are configured to, with the at least one processor, cause the apparatus at least to perform: receiving, from the serving cell, a rejection response to the message; performing radio resource management measurements based on the rejection response.

According to some examples, the at least one memory and the computer program code are configured to, with the at least one processor, cause the apparatus at least to perform: receiving, from the serving cell, a confirmation response to the message; entering a first mode wherein the apparatus does not perform radio resource management measurements; monitoring, when in the first mode, a Wake Up Signal beacon from the serving cell.

According to some examples, the at least one memory and the computer program code are configured to, with the at least one processor, cause the apparatus at least to perform: monitoring, when in the first mode, a Wake Up Signal beacon from a cell of the list of cells, wherein the monitoring of the cell of the list of cells is performed at a lower periodicity than the monitoring of the Wake Up Signal beacon from the serving cell.

According to some examples, the at least one memory and the computer program code are configured to, with the at least one processor, cause the apparatus at least to perform: determining that a quality of the monitored Wake Up Signal beacon from the serving cell is below a quality threshold; monitoring, when the quality of the monitored Wake Up Signal beacon from the serving cell is determined to be below a quality threshold, Wake Up Signal beacons from all cells indicated in the list of cells.

According to some examples, the at least one memory and the computer program code are configured to, with the at least one processor, cause the apparatus at least to perform: determining that a quality of each of the monitored Wake Up Signal beacons from all cells indicated in the list of cells is below a respective quality threshold; sending, to the serving cell and when the quality of each of the monitored Wake Up Signal beacons from all cells indicated in the list of cells is determined to be below a respective quality threshold, a request to resume radio resource management measurements.

According to some examples, the quality of at least one of the monitored Wake Up Signal beacon from the serving cell and each of the monitored Wake Up Signal beacons from all cells indicated in the list of cells is determined based on whether a predetermined number of previous beacons is correctly received or not.

According to a fourth aspect there is provided an apparatus comprising: circuitry for: performing a first determination that a mobility of the apparatus is below a mobility threshold; performing a second determination that the apparatus is in Wake Up Signal coverage of at least two cells; sending, to a serving cell and when the first determination and second determination have been performed, a message comprising: an indication that the apparatus is suspending radio resource management measurements and a list of cells indicating one or more of the at least two cells.

According to a fifth aspect there is provided a computer program comprising instructions for causing an apparatus to perform at least the following: performing a first determination that a mobility of an apparatus is below a mobility threshold; performing a second determination that the apparatus is in Wake Up Signal coverage of at least two cells; sending, to a serving cell and when the first determination and second determination have been performed, a message comprising: an indication that the apparatus is suspending radio resource management measurements and a list of cells indicating one or more of the at least two cells.

According to a sixth aspect there is provided a computer program comprising instructions stored thereon for performing at least the following: performing a first determination that a mobility of an apparatus is below a mobility threshold; performing a second determination that the apparatus is in Wake Up Signal coverage of at least two cells; sending, to a serving cell and when the first determination and second determination have been performed, a message comprising: an indication that the apparatus is suspending radio resource management measurements and a list of cells indicating one or more of the at least two cells.

According to a seventh aspect there is provided a non-transitory computer readable medium comprising program instructions for causing an apparatus to perform at least the following: performing a first determination that a mobility of an apparatus is below a mobility threshold; performing a second determination that the apparatus is in Wake Up Signal coverage of at least two cells; sending, to a serving cell and when the first determination and second determination have been performed, a message comprising: an indication that the apparatus is suspending radio resource management measurements and a list of cells indicating one or more of the at least two cells.

According to an eighth aspect there is provided a non-transitory computer readable medium comprising program instructions stored thereon for performing at least the following: performing a first determination that a mobility of an apparatus is below a mobility threshold; performing a second determination that the apparatus is in Wake Up Signal coverage of at least two cells; sending, to a serving cell and when the first determination and second determination have been performed, a message comprising: an indication that the apparatus is suspending radio resource management measurements and a list of cells indicating one or more of the at least two cells.

According to a ninth aspect there is provided an apparatus comprising: means for receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

According to some examples, the apparatus comprises: means for sending, to the user equipment, a rejection response to the message, the rejection response, wherein the user equipment continues performing radio resource management measurements based on the rejection response.

According to some examples, the apparatus comprises: means for sending, to the user equipment, a confirmation response to the message; wherein the user equipment enters a first mode wherein the apparatus does not perform radio resource management measurements based on the confirmation response, and wherein the user equipment monitors, when in the first mode, a Wake Up Signal beacon from the apparatus.

According to some examples, the apparatus comprises: means for determining that a quality of each of the monitored Wake Up Signal beacons from all cells indicated in the list of cells is below a respective quality threshold; means for receiving, from the user equipment and when the quality of each of the monitored Wake Up Signal beacons from all cells indicated in the list of cells is determined to be below a respective quality threshold by the user equipment, a request to resume radio resource management measurements; means for sending radio resource management signals to the user equipment based on the request to resume radio resource management measurements.

According to a tenth aspect, there is provided a method comprising: receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

According to some examples, the method comprises: sending, to the user equipment, a rejection response to the message, the rejection response, wherein the user equipment continues performing radio resource management measurements based on the rejection response.

According to some examples, the method comprises: sending, to the user equipment, a confirmation response to the message; wherein the user equipment enters a first mode wherein the apparatus does not perform radio resource management measurements based on the confirmation response, and wherein the user equipment monitors, when in the first mode, a Wake Up Signal beacon from the apparatus.

According to some examples, the method comprises: determining that a quality of each of the monitored Wake Up Signal beacons from all cells indicated in the list of cells is below a respective quality threshold; receiving, from the user equipment and when the quality of each of the monitored Wake Up Signal beacons from all cells indicated in the list of cells is determined to be below a respective quality threshold by the user equipment, a request to resume radio resource management measurements; sending radio resource management signals to the user equipment based on the request to resume radio resource management measurements.

According to a eleventh aspect there is provided an apparatus comprising: at least one processor; and at least one memory including computer program code; the at least one memory and the computer program code configured to, with the at least one processor, cause the apparatus at least to perform: receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

According to some examples, the at least one memory and the computer program code are configured to, with the at least one processor, cause the apparatus at least to perform: sending, to the user equipment, a rejection response to the message, the rejection response, wherein the user equipment continues performing radio resource management measurements based on the rejection response.

According to some examples, the at least one memory and the computer program code are configured to, with the at least one processor, cause the apparatus at least to perform: sending, to the user equipment, a confirmation response to the message; wherein the user equipment enters a first mode wherein the apparatus does not perform radio resource management measurements based on the confirmation response, and wherein the user equipment monitors, when in the first mode, a Wake Up Signal beacon from the apparatus.

According to some examples, the at least one memory and the computer program code are configured to, with the at least one processor, cause the apparatus at least to perform: determining that a quality of each of the monitored Wake Up Signal beacons from all cells indicated in the list of cells is below a respective quality threshold; receiving, from the user equipment and when the quality of each of the monitored Wake Up Signal beacons from all cells indicated in the list of cells is determined to be below a respective quality threshold by the user equipment, a request to resume radio resource management measurements; sending radio resource management signals to the user equipment based on the request to resume radio resource management measurements.

According to a twelfth aspect there is provided an apparatus comprising circuitry for: receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

According to a thirteenth aspect there is provided a computer program comprising instructions for causing an apparatus to perform at least the following: receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

According to a fourteenth aspect there is provided a computer program comprising instructions stored thereon for performing at least the following: receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

According to a fifteenth aspect there is provided a non-transitory computer readable medium comprising program instructions for causing an apparatus to perform at least the following: receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

According to a sixteenth aspect there is provided a non-transitory computer readable medium comprising program instructions stored thereon for performing at least the following: receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows an example of a signal;
Figure 2 shows an example of signal generation;
Figure 3 shows an example message flow;
Figure 4 shows a flowchart of a method;
Figure 5 shows a method flow diagram;
Figure 6 shows a method flow diagram;
Figure 7 shows an example apparatus;
Figure 8 shows an example apparatus; and
Figure 9 shows a schematic representation of a non-volatile memory medium storing instructions which when executed by a processor allow a processor to perform one or more of the steps of the methods disclosed herein.

### DETAILED DESCRIPTION

In the following certain embodiments are explained with reference to mobile communication devices capable of communication via a wireless cellular system and mobile communication systems serving such mobile communication devices.

Some examples relate to low power wake-up signal (WUS) and low power wake-up receiver (WUR). Some examples relate to WUS design and related Layer 1 (L1) procedures for supporting WUR receivers.

Some examples relate to enhancements for UE energy savings, in some cases for UEs/devices that have battery lifetime targets of weeks or even years.

These devices may include devices without a continuous energy source, e.g., UEs using small rechargeable and non- rechargeable single coin cell batteries, such as those used for vertical use cases (including sensors and actuators that are deployed extensively for monitoring, measuring, charging, etc). Generally, their batteries are not rechargeable and expected to last at least few years. Additionally, these devices may also include wearables such as smart watches, rings, eHealth related devices, and medical monitoring devices, for which it is challenging to sustain up to 1-2 weeks, as required, with typical battery capacity.

Some of the UE types named above (e.g. sensors, actuators and wearables), not only require a long battery life, but also require latency-critical services (such as sensors for fire detection and extinguishing, to name an example). Therefore, solutions such as extended discontinuous reception (eDRX), which allows extending the periodicity by which the UE wakes up to monitor for paging, which in turn reduces the average power consumption, are not applicable as eDRX would lead to unacceptable communication latency. Using L1 procedures and/or higher layer protocol changes, WUS can be supported.

A low-power WUR can be included in a UE to reduce power consumption. The main radio of the UE can be in a sleep mode (or even powered off) for power saving and be activated only upon the reception of the wake-up signal from the network. As such, the network triggers the UE to wake-up exactly when needed in an event-driven manner, by transmitting a special WUS to the UE, which is monitored by the dedicated low-power WUS receiver at the UE. When a UE receives the WUS, the WUS receiver can trigger the wake-up of the ordinary NR transceiver and communication can start. Thus, the ultra-low power receiver wakes up the main radio and otherwise, the main radio is OFF or kept in a deep sleep mode. The assumption is that the low-power wake-up receiver can be operated in an always 'on' manner with very low power consumption. Tt is expected that it the low-power WUR will consume less power compared to the NR transceiver, by designing a simple (WUS) signal and the use of dedicated hardware for its monitoring, which is only able to receive the WUS.

It is noted that there is a tradeoff between power consumption and RF sensitivity (and consequently coverage). Usually, the WUS receiver sensitivity is worse than a main receiver (e.g., NR/LTE/Wifi) receiver. For example:
- Main receiver in NR idle: RF sensitivity -100 dBm is associated with an average power consumption of 30-50 mW. Typically, the NR receiver can operate at around -120 dBm.
- Low power WUS receiver (almost zero power receiver using a passive circuit with envelope detector): RF sensitivity~-70/80 dBm with an average power consumption of 7.4 nW. This means 100x power saving with some sensitivity degradation.

An On-Off Keying (OOK) signal or OOK-like signal can be transmitted by a base station (e.g., NR gNB) without hardware modifications. This can be performed as stated in IEEE 802.11ba where a set of subcarriers are switched ON/OFF per Orthogonal-Frequency Division Multiplexing (OFDM) signal. Since the signal is not just a single carrier being switched ON and OFF, but rather multiple subcarriers, the modulation is named MultiCarrier OOK (MC-OOK). The corresponding receiver will be able to detect the symbols by detecting the signal power after filtering the relevant subcarriers (some guard subcarriers are needed and the actual number puts requirements to the order of the filter). In 802.11 ba, Manchester encoding is applied to the transmitted symbols, thereby ensuring a constant DC level of the transmitted WUS signal. This allows the receiver side to compare the detected power with a threshold value equal to the average power level.

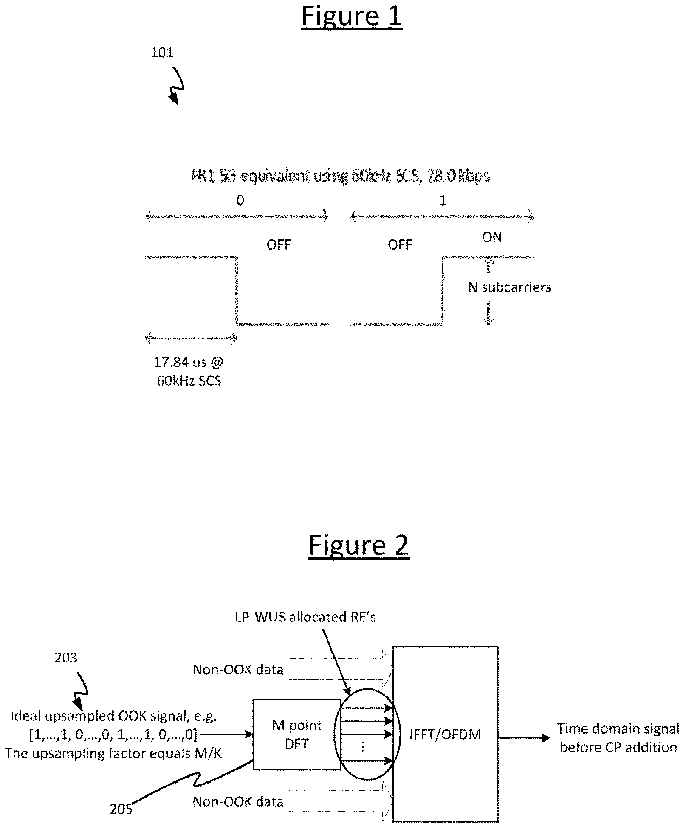

The OOK signal generated as described above, will have a maximum symbol rate equal to half the symbol rate of the NR OFDM symbols in case of Manchester encoding. For 15kHz SCS, this means a maximum OOK symbol rate of 7ksps. Even at 60kHz SCS, the maximum OOK symbol rate would be 28kbps as illustrated in signal 101 of Figure 1.

Depending on a duty cycle of OOK signalling, a signal can be classified as:
1) OFDM symbol OOK - for these signals are ON/OFF at the symbol rate, i.e., using entire Bandwidth (BW) to transmit a portion of the Manchester encoded bit. There is an under-utilization of the useful spectrum, but these signals are robust against frequency selecting fading.
2) DFT-s-OFDM based OOK - these signals involve Direct Fourier Transform (DFT) spreading using *M* point DFT before the final *M* « *N* point Inverse Fast Fourier Transform (IFFT). Since multiple OOK symbols or multiple ON/OFF durations of an OOK symbol can be transmitted in an OFDM symbol depending on the Low Power (LP)-WUS BW, these signals utilize the available spectrum efficiently, i.e., transmitting more bits in an OFDM symbol. There is however an increased complexity, BW determines the smearing of ON/OFF signaling, and performance suffers from intersymbol interference (ISI) in a rich scattering environment. Some of the above-mentioned issues can be solved by using sufficiently long ON/OFF duration. Since the OOK signal lies within OFDM symbol, cyclic prefix can alter the synchronization across OFDM symbol.

In order to increase the spectrum efficiency and symbol rate, it also is possible to approximate an OOK signal inside an OFDM symbol. Figure 2 illustrates an example this. The wanted OOK signal 203 is upsampled to the wanted sampling rate and converted to frequency domain by an M-point DFT 205. M equals the number of subcarriers allocated for the WUS signal. K is the number of OOK ON/OFF symbols per OFDM symbol. The upsampling factor = M/K.

An ideal OOK signal would be a square wave, but generated signals may comprise a best fit, for example a best fit using the M-point DFT approach discussed above. As the signal is generated using normal NR subcarriers and SCS, the signal will be able to coexist with other NR signals inside the same OFDM symbol.

3GPP R1-2210909 shows an example of how an OOK (or MC-OOK) receiver could be implemented in a UE. A received RF signal is filtered and amplified before down-converting to Baseband (BB) or Intermediate Frequency (IF). A Baseband Low Pass Filter (BB LPF) or Baseband Processing Function (BPF) will remove signal outside the wanted signal before it is fed to a 1-bit analog-to-digital converter (ADC), or comparator. Such receiver can use few hardware bocks, a low-resolution ADC with low clock and does not need advanced baseband processing, so it is a power efficiency solution.

Frequency-shift keying (FSK) is also a modulation candidate. A group of contiguous subcarriers in two separate sub-bands and two parallel OOK receivers can be used (as discussed in (3GPP R1-2210909).

The example WUR architectures discussed above, as well as other WUR architectures, can reduce IDLE mode power consumption by omitting paging receptions until the gNB explicitly triggers a wakeup of the main radio by sending a wakeup request. However, the benefit of having a wakeup receiver will diminish if the main radio is woken up to perform Radio Resource Management (RRM) measurements e.g. for evaluating if a cell reselection shall be triggered. RRM measurements can be delegated to a WUR, however this results in extra power consumption at the WUR. RRM measurements could include, for example, RSRP and/or RSRQ measurements. In some examples, the RRM measurements may include SS-RSRP and SS-RSRQ measurements.

Even if RRM measurements are delegated to a WUR, it is still useful if RRM measurements can be omitted when channel conditions allow so . This can reduce power consumption in use cases where RRM measurements are not needed. In some examples described herein, a UE requests suspension of RRM measurements in WUS mode when channel conditions allow this. WUS mode can be considered to be a mode where the UE has switch at least one main radio to a sleep mode, and is not using at least one WUR to monitor for a WUS.

Examples provide signalling for a UE to inform a base station (e.g., gNB) that the UE wants to suspend RRM measurements as long as there is good reception quality on a WUS beacon (or sync signal) from an agreed set of cells

Since there is no reporting of neighbour cell measurements in RRC_IDLE mode to the network, the network will not know which cells that UE is able to receive with good quality. The UE may have moved around since it was last in RRC_ACTIVE state and can move anywhere inside the Registration Area without informing the network. According to some examples, a (semi-)stationary UE may go to RRC_ACTIVE mode to inform the network about a subset of cells which it is able to receive with good signal level and quality. After returning to RRC_IDLE state, as long as the UE stays in WUS coverage of this subset of cells, it may omit RRM measurements. This could for instance be a semi-static UE carried by a person at home or at the workplace therefore in WUS coverage of the same cells for long. Or it could be a RedCap UE used for I-IoT also in WUS coverage of the same cells for long. A UE may be determined as stationary when a measurement of its mobility is below a first mobility threshold. A UE may be determined as semi-stationary when a measurement of its mobility is below a second mobility threshold. Mobility may be measured as described in 3GPP TS 38.304, section 5.2.4.9, where there are definitions on how to determine low mobility and stationary mobility based on Reference Signals Received Power (RSRP) and Reference Signals Received Quality (RSRQ) values. Any other suitable mobility measurement may be used, however.

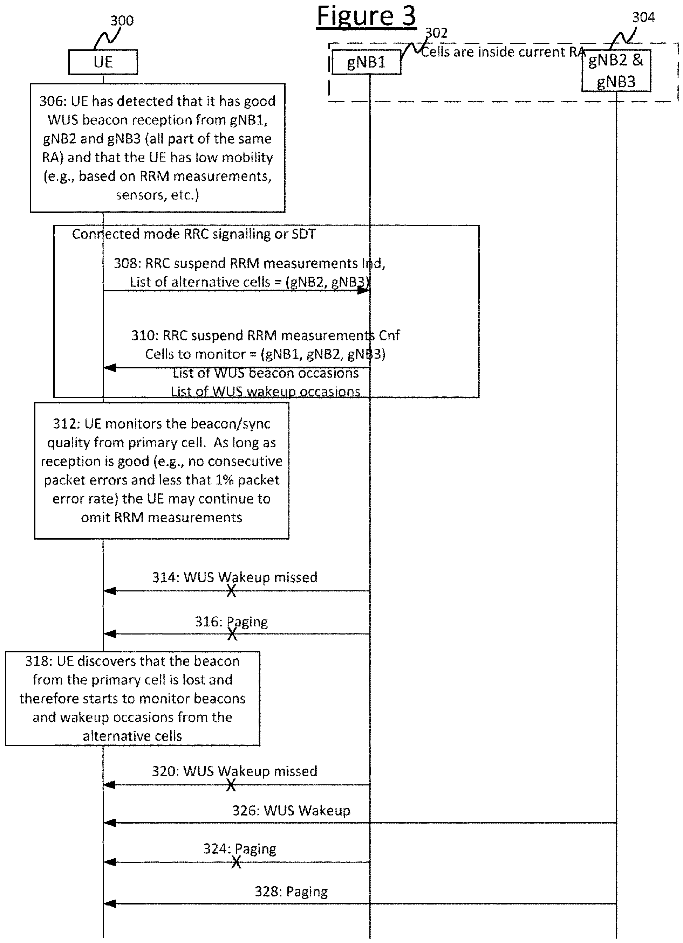

If the UE evaluates that it is in a stationary/semi-stationary condition and has sufficient RX quality of a set of cells (e.g. evaluated by RRM measurements or approximated RRM measurements), then the UE may send an indication that it is suspending RRM measurements to the serving gNB along with a list of alternative gNBs (see example with two alternative gNBs, gNB2 and gNB3, in Figure 3). The indication may comprise an RRC indication, "RRC suspend RRM measurements Ind". The alternative gNBs are the aforementioned set of cells (or a subset thereof) except the serving cell, which the network may choose as alternative sources for the wakeup call and paging. The alternative cells are monitored in case the beacon of the primary cell (which is the serving cell when entering WUS mode) is not received.

Figure 3 shows an example message flow between a network comprising a UE 300, a first base station 302 and at least one other base station 304. In the example shown in Figure 3, the base station 302 comprises gNB1 and the at least one other base station comprises gNB2 and gNB3. Figure 3 shows an illustration of a use case where the network escalates a WUS after no response to the first WUS and to paging in the cell of the primary base station 302. in this example the network comprises base station 302 and the at least one other base station 304. The escalation allows UE 300 to receive the wakeup call and paging from either gNB2 or gNB3 304 and UE 300 can then proceed with normal RRC connection setup. Information transmitted and received to gNB1 302 may be considered to be transmitted and received at a serving cell. Information transmitted and received to gNB1 302 may be considered to be transmitted and received at cells other than the serving cell, which are in the same Registration Area (RA).

At 306, UE 302 determines that it has good WUS beacon reception from base station 302 (serving cell) and the at least one other base station 304 (at least one other cell). UE 302 may determine that it has good WUS beacon reception based on RRM measurements or approximated RRM measurements. The UE may determine that it has good WUS beacon when the last x number of beacons has been correctly received.

At 306, UE 302 also determines that is has low mobility (i.e., is stationary or semi-stationary), or UE 302 determines that it can assume that it has low mobility. The UE may determine that it has low mobility based on at least one of RRM measurements and sensor measurements, as well as based on other criteria.

308 and 310 show connected RRC mode signalling or Small Data Transmission (SDT). At 308, UE 300 sends an indication to primary base station 302 indicating that UE is suspending RRM measurements. UE 300 also indicates the at least one other base station 304 from which it can receive good WUS beacon quality.

At 310, base station 302 sends back to UE 300 a confirmation in response to 308 ("RRC suspend RRM measurements Cnf") with a set of cells to monitor along with their beacon location in time and frequency and also the wakeup occasions. The set to monitor may be a subset of the set of cells indicated by UE 300, e.g. if the network considers a cell as busy and therefore prefers to send the wakeup signal on a subset of cells.

At 312, UE 300 monitors WUS beacon quality and/or synchronization signal quality from primary cell 302. As long as reception quality is good (for example, if there are no consecutive packet errors and/or there is less than a threshold value of packet error rate (e.g., less than a packet error rate of 1%)), then UE 300 may continue to omit RRM measurements. Further, as long as the as the beacon of the primary cell from base station 302 is good, UE 300 may completely omit monitoring of beacons (or sync signals) from alternative cells of the at least one other bast station 304 or UE 300 may monitor those cells with longer periodicity, which may be different for the different cells as indicated in the "RRC suspend RRM measurements Cnf" confirm message received from the network at 310. This allows the network to control how soon UE 300 will discover if the reception of an alternative cell is lost.

There is a mutual benefit for the UE 300 and gNBs of Figure 3:
- UE 300 can avoid performing RRM measurements when in static/semi-static conditions within WUS coverage of multiple cells. This will save power in UE 300 and extend the IDLE mode battery lifetime.
- When UE 300 has suspended RRM measurements, the network will know the subset of cells that UE 300 is monitoring and in case UE 300 is not responding to a paging on the primary cell (serving cell when entering WUS mode), the network only needs to escalate the wakeup and paging to the alternative set of cells indicated by the network to UE 300 (inside the "RRC suspend RRM measurement Cnf" message) and the network does not need to broadcast the wakeup message to the complete Registration Area (RA).

At 314 UE 300 misses a WUS Wakeup beacon base station 302, and at 316 UE 300 misses paging from base station 302.

At 318, UE 300 determines that its WUR has failed to receive the WUS beacon and/or synchronization signal from primary cell 302. UE 300 will start to use its WUR to also monitor WUS from alternative cell(s) 304. If a WUS is received from an alternative cell 304 as shown at 326, UE 300 shall wakeup its main radio and perform a normal paging operation as shown at 328.

At 320 UE 300 misses a WUS Wakeup beacon base station 302, and at 324 UE 300 misses paging from base station 302.

If the WUR of UE 300 fails to receive the beacon / sync signal from all the monitored gNBs, UE 300 will wakeup its main radio and resume RRM measurements and inform primary gNB 302, by sending the "RRC resume RRM measurements Ind". The new RRM measurements may trigger UE 300 to select a new set of cells to monitor and request RRM measurements to be suspended again. The signalling to the network does cause additional power consumption and proposed signalling is therefore most beneficial for when the UE is stationary/semi-stationary and stays in the same channel conditions for a longer period.

To save power, the periodicity of the WUS wakeup occasions may be longer for the alternative cell(s) of base station(s) 304 compared to the serving cell of primary base station 302. In addition, in case there are multiple alternative cells, the distribution of the wakeup occasions between these cells may be chosen such that the maximum duration to the first coming wakeup occasion is minimized.

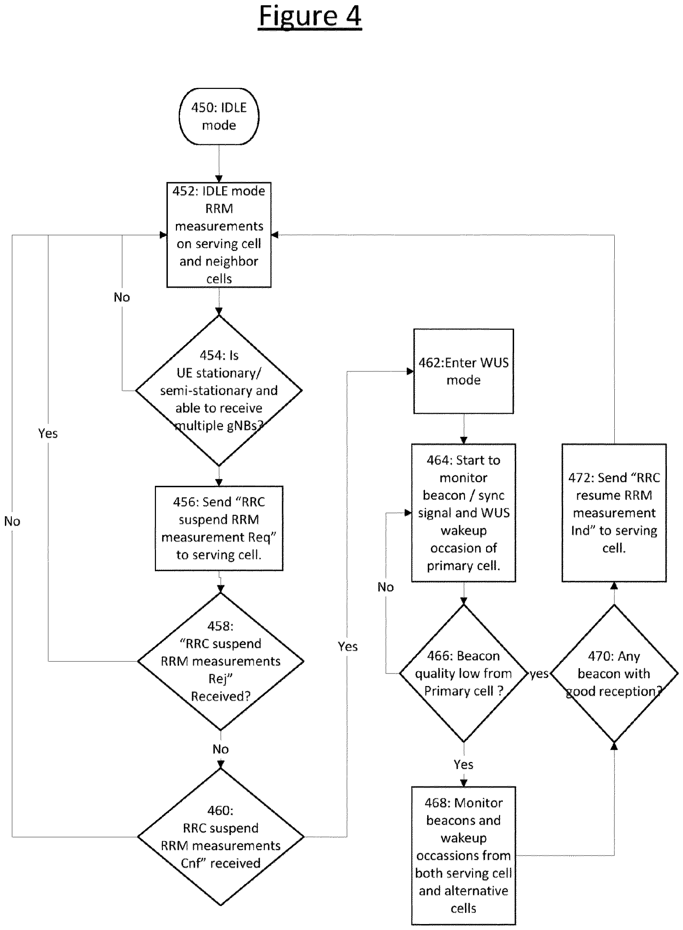

Figure 4 shows a flowchart indicating how a UE such as UE 300 may apply signalling to suspend and resume RRM measurements.

At 450, the UE is in IDLE mode, and at 452 the UE is performing idle mode RRM measurements as normal UE behavior. To evaluate if there are strong alternative cells, the UE measures all neighbor cells independent of the serving cell SS-RSRP and SS-RSRQ level. The UE may not have entered WUS mode yet, or UE may perform RRM measurements in WUS mode.

At 454 UE determines if it is stationary or semi-stationary and evaluates if it is in channel conditions where it is inside the WUS coverage of multiple cells (at least two). If so, the UE may proceed to send an indication requesting that the UE is suspending RRM measurements to a serving cell of the UE at 456. Otherwise, the UE continues to perform RRM measurements either in the main radio (MR) or in the wakeup receiver (lowpower radio (LR)).

At 456, the UE sends the "RRC suspend RRM measurements Req" to the network indicating the set of alternative cells which the UE wants to monitor. This set of cells are estimated by the UE to provide WUS coverage.

At 458, which is optional, if the serving base station sends back a rejection message to the request sent at 456, the UE has to continue to perform RRM measurements.

At 460, if the UE receives a confirmation message from the serving base station in response to the request sent at 454, the UE may stop performing RRM measurements, but will have to monitor the WUS beacon/sync signal from both the primary and the alternative cells.

At 462, if the UE is not already in WUS mode, the UE enters WUS mode. At 464, the UE then starts monitoring the beacon/sync signal and WUS wakeup occasion of the primary cell. As long as the beacon of the primary cell is good, the UE may completely omit monitoring of beacons from alternative cells or the UE may monitor those with longer periodicity, which may be different for the different cells and this is indicated in the confirm message from the network. The network has informed the UE about the WUS beacon locations in time and frequency in the confirm message received in 460.

At 466, as long as the beacon quality of the primary cell is good (e.g. all the last x number beacons are correctly received) then the UE does not receive during the wakeup occasions of the alternative cells, since it is assumed that UE will be able to receive the WUS wakeup message from the primary cell either in the first attempt or in a second attempt.

At 468, if the beacon quality is low, the UE shall start to monitor both the beacon and the wakeup occasion from all the monitored cells. Since there is a risk that a wakeup message transmitted by the primary cell is missed the UE is listening also to the alternative cells.

At 470, if the UE evaluates that none of the beacons are having sufficient quality, then it shall send a "RRC resume measurement Ind" to the serving cell.

At 472, the UE sends a "RRC resume RRM measurement Ind" to the network, which means that the network can no longer assume that the UE is in coverage of the set of cells originally indicated in the "RRC suspend RRM measurements Req". The network may now have to escalate wakeup messages and pagings to the whole Registration Area. The UE returns to 452 and resumes RRM measurements, which may eventually trigger another suspension of RRM measurements.

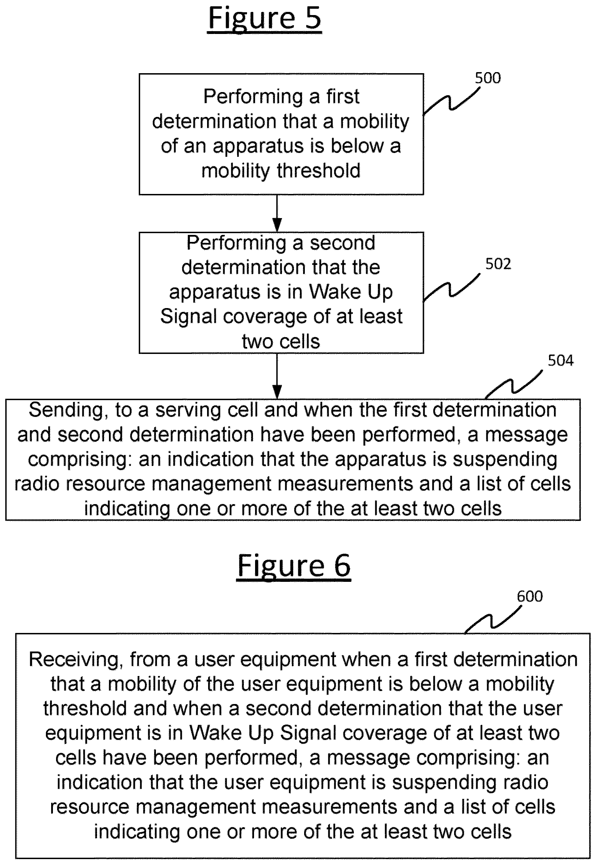

Figure 5 shows an example method flow. The method may be performed, for example, by a UE as described herein.

At 500, the method comprises performing a first determination that a mobility of an apparatus (e.g., the apparatus performing the method) is below a mobility threshold.

At 502, the method comprises performing a second determination that the apparatus is in WUS coverage of at least two cells.

At 504, the method comprises sending, to a serving cell and when the first determination and second determination have been performed, a message comprising: an indication that the apparatus is suspending radio resource management measurements and a list of cells indicating one or more of the at least two cells.

Figure 6 shows an example method flow. The method may be described, for example, by a network node as described herein (e.g., base station 302).

At 600, the method comprises receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

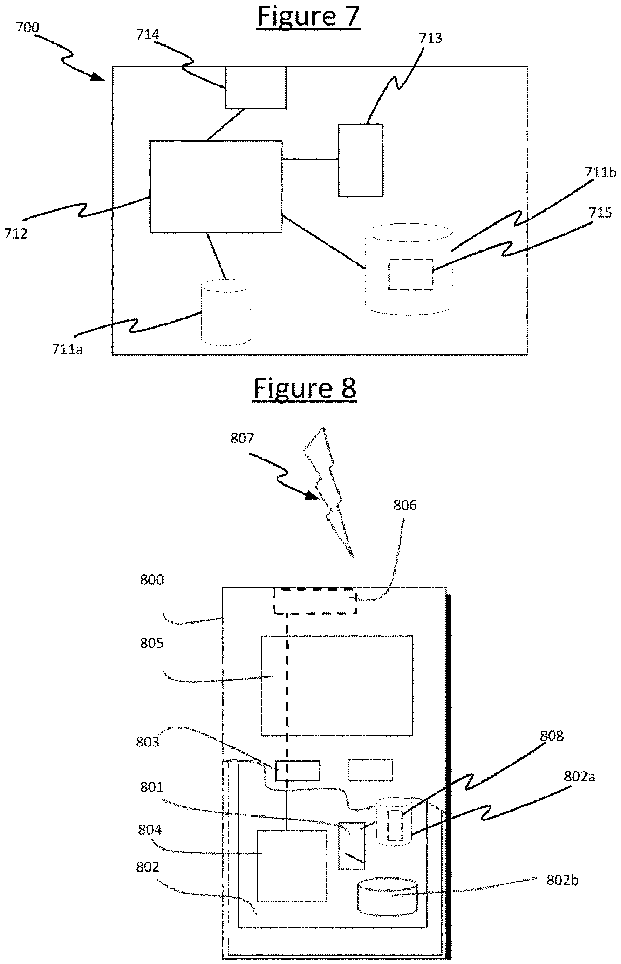

Figure 7 illustrates an example of a control apparatus 760 for controlling a network. The control apparatus may comprise at least one random access memory (RAM) 711a, at least on read only memory (ROM) 711b, at least one processor 712, 713 and an input/output interface 714. The at least one processor 712, 713 may be coupled to the RAM 711a and the ROM 711b. The at least one processor 712, 713 may be configured to execute an appropriate software code 715. The software code 715 may for example allow to perform one or more steps to perform one or more of the present aspects. The software code 715 may be stored in the ROM 711b. The control apparatus 700 may be interconnected with another control apparatus 700 controlling another function of the RAN or the core network.

Figure 8 illustrates an example of a terminal 800, such as a UE. The terminal 800 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 800 may provide, for example, communication of data for carrying communications. The communications may be one or more of voice, electronic mail (email), text message, multimedia, data, machine data and so on.

The terminal 800 may receive signals over an air or radio interface 807 via appropriate apparatus for receiving and may transmit signals via appropriate apparatus for transmitting radio signals. In Figure 8 transceiver apparatus is designated schematically by block 806. The transceiver apparatus 806 may be provided for example by means of a radio part and associated antenna arrangement. The antenna arrangement may be arranged internally or externally to the mobile device.

The terminal 800 may be provided with at least one processor 801, at least one memory ROM 802a, at least one RAM 802b and other possible components 803 and 804 for use in software and hardware aided execution of tasks it is designed to perform, including control of access to and communications with access systems and other communication devices. The at least one processor 801 is coupled to the RAM 802b and the ROM 802a. The at least one processor 801 may be configured to execute an appropriate software code 808. The software code 808 may for example allow to perform one or more of the present aspects. The software code 808 may be stored in the ROM 802a.

The processor, storage and other relevant control apparatus can be provided on an appropriate circuit board and/or in chipsets. This feature is denoted by reference 802. The device may optionally have a user interface such as key pad 805, touch sensitive screen or pad, combinations thereof or the like. Optionally one or more of a display, a speaker and a microphone may be provided depending on the type of the device.

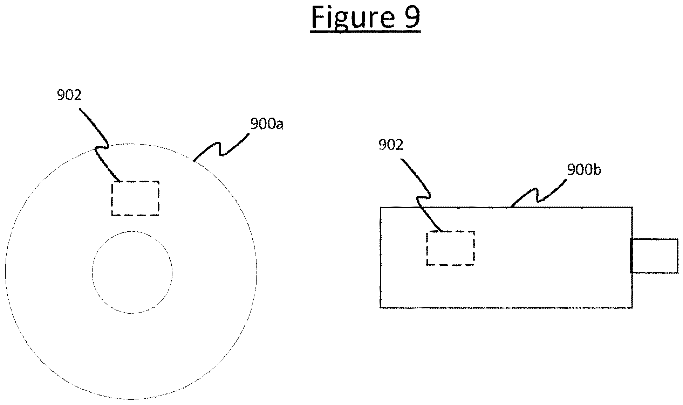

Figure 9 shows a schematic representation of non-volatile memory media 900a (e.g. computer disc (CD) or digital versatile disc (DVD)) and 900b (e.g. universal serial bus (USB) memory stick) storing instructions and/or parameters 902 which when executed by a processor allow the processor to perform one or more of the steps of the above-described methods.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising:
means for performing a first determination that a mobility of the apparatus is below a mobility threshold;
means for performing a second determination that the apparatus is in Wake Up Signal coverage of at least two cells;
means for sending, to a serving cell and when the first determination and second determination have been performed, a message comprising: an indication that the apparatus is suspending radio resource management measurements and a list of cells indicating one or more of the at least two cells.

2. An apparatus according to claim 1, wherein the apparatus comprises:
means for receiving, from the serving cell, a rejection response to the message;
means for performing radio resource management measurements based on the rejection response.

3. An apparatus according to claim 1, wherein the apparatus comprises:
means for receiving, from the serving cell, a confirmation response to the message;
means for entering a first mode wherein the apparatus does not perform radio resource management measurements;
means for monitoring, when in the first mode, a Wake Up Signal beacon from the serving cell.

4. An apparatus according to claim 3, wherein the apparatus comprises:
means for monitoring, when in the first mode, a Wake Up Signal beacon from a cell of the list of cells, wherein the monitoring of the cell of the list of cells is performed at a lower periodicity than the monitoring of the Wake Up Signal beacon from the serving cell.

5. An apparatus according to claim 3 or claim 4, wherein the apparatus comprises:
means for determining that a quality of the monitored Wake Up Signal beacon from the serving cell is below a quality threshold;
means for monitoring, when the quality of the monitored Wake Up Signal beacon from the serving cell is determined to be below a quality threshold, Wake Up Signal beacons from all cells indicated in the list of cells.

6. An apparatus according to claim 5, wherein the apparatus comprises:
means for determining that a quality of each of the monitored Wake Up Signal beacons from all cells indicated in the list of cells is below a respective quality threshold;
means for sending, to the serving cell and when the quality of each of the monitored Wake Up Signal beacons from all cells indicated in the list of cells is determined to be below a respective quality threshold, a request to resume radio resource management measurements.

7. An apparatus according to claim 5 or claim 6, wherein the quality of at least one of the monitored Wake Up Signal beacon from the serving cell and each of the monitored Wake Up Signal beacons from all cells indicated in the list of cells is determined based on whether a predetermined number of previous beacons is correctly received or not.

8. A method comprising:
performing a first determination that a mobility of an apparatus is below a mobility threshold;
performing a second determination that the apparatus is in Wake Up Signal coverage of at least two cells;
sending, to a serving cell and when the first determination and second determination have been performed, a message comprising: an indication that the apparatus is suspending radio resource management measurements and a list of cells indicating one or more of the at least two cells.

9. The method according to claim 8, further comprising:
receiving, from the serving cell, a rejection response to the message;
performing radio resource management measurements based on the rejection response.

10. The method according to claim 8, further comprising:
receiving, from the serving cell, a confirmation response to the message;
entering a first mode wherein the apparatus does not perform radio resource management measurements;
means for monitoring, when in the first mode, a Wake Up Signal beacon from the serving cell.

11. An apparatus comprising:
means for receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.

12. An apparatus according to claim 11, wherein the apparatus comprises:
means for sending, to the user equipment, a rejection response to the message, the rejection response, wherein the user equipment continues performing radio resource management measurements based on the rejection response.

13. An apparatus according to claim 11, wherein the apparatus comprises:
means for sending, to the user equipment, a confirmation response to the message;
wherein the user equipment enters a first mode wherein the apparatus does not perform radio resource management measurements based on the confirmation response, and wherein the user equipment monitors, when in the first mode, a Wake Up Signal beacon from the apparatus.

14. An apparatus according to any of claims 11 to 13 wherein the apparatus comprises:
means for determining that a quality of each of the monitored Wake Up Signal beacons from all cells indicated in the list of cells is below a respective quality threshold;
means for receiving, from the user equipment and when the quality of each of the monitored Wake Up Signal beacons from all cells indicated in the list of cells is determined to be below a respective quality threshold by the user equipment, a request to resume radio resource management measurements;
means for sending radio resource management signals to the user equipment based on the request to resume radio resource management measurements.

15. A method comprising:
receiving, from a user equipment when a first determination that a mobility of the user equipment is below a mobility threshold and when a second determination that the user equipment is in Wake Up Signal coverage of at least two cells have been performed, a message comprising: an indication that the user equipment is suspending radio resource management measurements and a list of cells indicating one or more of the at least two cells.
